# FASCICULE DE BREVET EUROPEEN

(11) **EP 1 145 045 B1**
(45) Date de publication et mention de la délivrance du brevet: **31.03.2004**
(21) Numéro de dépôt: 99961172.6
(22) Date de dépôt: 24.12.1999
(51) Int. Cl.: G01V 1/20

(54) **SYSTEME PERFECTIONNE D'ACQUISITION DE DONNEES GEOPHYSIQUES**
VERBESSERTES SYSTEM FÜR GEOPHYSIKALISCHE DATENERFASSUNGS
IMPROVED SYSTEM FOR ACQUIRING GEOPHYSICAL DATA

(30) Priorité: 24.12.1998 FR 9816434
(43) Date de publication de la demande: 17.10.2001
(73) Titulaire: SOCIETE D'ETUDES RECHERCHES ET CONSTRUCTIONS ELECTRONIQUES SERCEL, F-44470 Carquefou (FR)
(72) Inventeur: MENARD, Jean-Paul, F-44470 Thouare sur Loire (FR)
(74) Mandataire: Texier, Christian
(86) Numéro de dépôt international: PCT/FR1999/003287
(87) Numéro de publication internationale: WO 2000/039610

(56) Documents cités:
- EP-A- 0 050 560
- EP-A- 0 372 908
- WO-A-98/12577
- WO-A-98/34448
- FR-A- 2 551 221
- US-A- 2 590 531
- US-A- 4 117 448
- US-A- 4 526 430
- US-A- 5 628 655
- "SERCEL advertisement" WORLD OIL,US,GULF PUBLISHING CO. HOUSTON, vol. 218, no. 9, 1 septembre 1997 (1997-09-01), page 165 XP002134694

## Description

La présente invention concerne les systèmes déployés sur site en environnement terrestre ou maritime pour l'acquisition de données géophysiques.

Ces systèmes utilisent un ensemble de capteurs, reliés par des câbles électriques à des boîtiers dont le rôle est de traiter les données issues des capteurs, notamment en numérisant les données et en les transmettant à une unité centrale à laquelle les boîtiers sont également reliés par des câbles électriques. Ces boîtiers peuvent également comprendre des moyens permettant de tester le fonctionnement des capteurs et la numérisation des données.

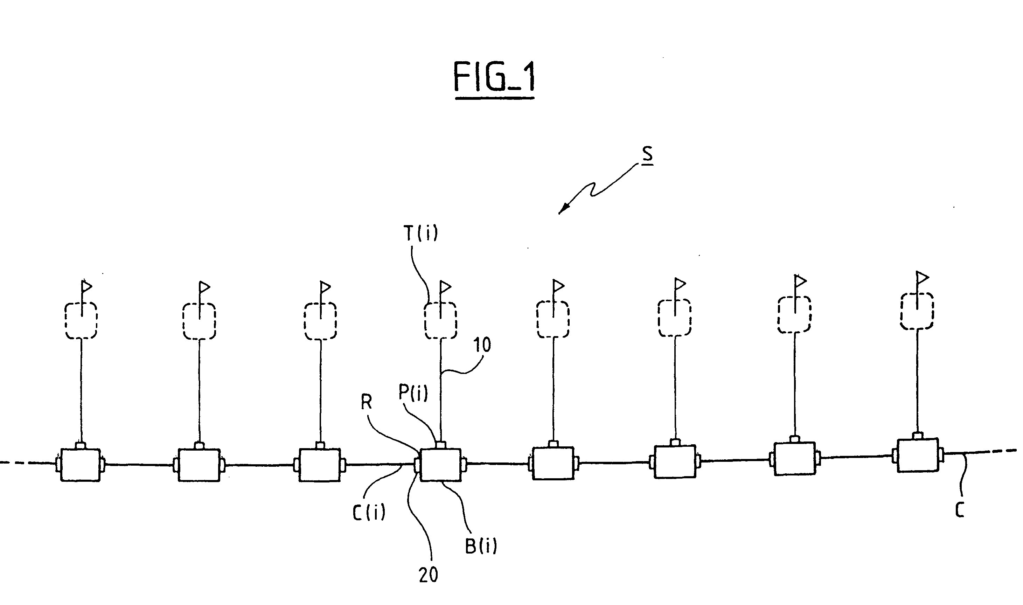

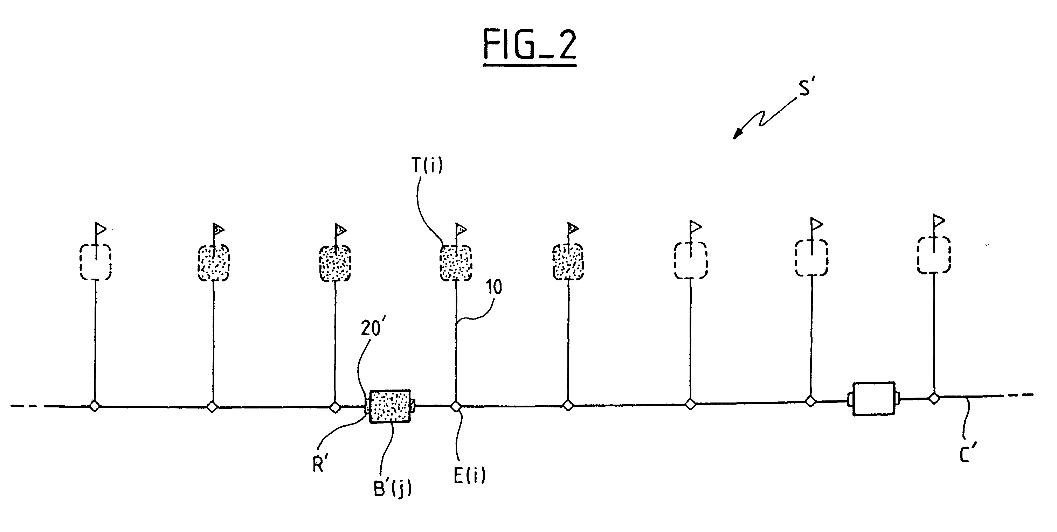

Les systèmes connus sont généralement conçus selon l'une des deux architectures suivantes, que l'on va expliciter en référence aux figures 1 et 2 :
- architecture monotrace (représentée sur la figure 1),
- architecture multitrace (représentée sur la figure 2).

La figure 1 est un schéma représentant une architecture monotrace. Sur ce schéma, le système d'acquisition de données géophysiques S comporte une pluralité de traces T(i), dont chacune est constituée d'un ensemble de capteurs géophysiques.

De telles traces T(i) sont bien connues et sont classiquement constituées de n modules identiques qui relient chacun en série ou en parallèle m capteurs géophysiques tels que des géophones dont le signal de sortie analogique caractérise la réponse des couches du sous-sol au signal émis suite à l'activation d'une ou plusieurs sources sismiques.

Le système monotrace S comprend également des boîtiers B(i) pour numériser les données analogiques issues des capteurs de chaque trace, et transmettre ces données à des moyens de stockage (non représentés sur la figure). Chaque trace T(i) est ainsi reliée à un boîtier respectif B(i) par un câble 10 connecté à une prise P(i) du boîtier, ledit câble véhiculant les données analogiques issues des capteurs de la trace T(i).

Les boîtiers B(i) comprennent des moyens de numérisation de ces signaux analogiques, et de transmission aux moyens de stockage par l'intermédiaire d'un câble C qui relie les boîtiers en série.

Le câble C est composé de tronçons C(i) véhiculant les signaux numériques issus des boîtiers B(i) ainsi que l'alimentation électrique nécessaire au fonctionnement de ces boîtiers. Chaque tronçon C(i) est muni à chacune de ses deux extrémités d'un connecteur 20 pour le raccordement R avec un boîtier. Chaque boîtier B(i) comprend donc en plus de sa prise P(i) deux connecteurs pour coopérer avec les connecteurs 20 de deux tronçons de câble.

Le schéma de la figure 2 représente un système S' dit «multitrace» ou «à N traces», selon le deuxième type d'architecture couramment mis en oeuvre.

Le système multitrace S' comporte des boîtiers B'(j) de numérisation et de transmission de données, chaque boîtier étant relié à N traces T(i) (4 traces pour chaque boîtier dans le cas du système représenté ici, mais on utilise aussi couramment des systèmes à N traces dans lesquels N est égal par exemple à 6). Chaque trace est quant à elle reliée à un boîtier unique, par l'intermédiaire d'un câble 10 véhiculant les données analogiques issues des capteurs de la trace.

Une différence importante par rapport au système monotrace S représenté sur la figure 1 est que dans le cas du système multitrace, les câbles 10 de transmission de données analogiques sont reliés aux boîtiers B'(j) non pas directement par une prise, mais par l'intermédiaire d'un câble principal C' auquel les boîtiers sont reliés en série et auquel les câbles 10 sont raccordés par des épissures E(i) appelées « take out » selon la terminologie anglo-saxonne répandue.

Le câble C' transmet, comme le câble C du système monotrace de la figure 1, les données numériques issues des boîtiers à des moyens de stockage non représentés sur la figure.

Un système à N traces comprend ainsi N fois moins de boîtiers que de traces, chaque intervalle entre deux boîtiers consécutifs comprenant N take-out dont les N/2 premiers sont reliés à un premier des deux boîtiers, les N/2 autres take-out étant reliés au deuxième boîtier.

Le câble C' du système multitrace S' est plus complexe que le câble C du système monotrace de la figure 1. Ce câble C' comporte ainsi à l'intérieur d'une gaine unique :
- les prolongements des câbles 10 pour acheminer les données analogiques issues des traces de capteurs jusqu'au boîtier correspondant,
- des conducteurs de transmission des données numériques,
- au moins un conducteur pour l'alimentation des boîtiers en énergie.

Les boîtiers B'(j) sont reliés au câble C' par des connecteurs du boîtier coopérant avec des connecteurs homologues 20' du câble C' pour constituer des raccordements R'.

Dans les deux architectures connus décrites ci-dessus, la distance entre deux traces T(i) est typiquement de l'ordre de 50 mètres. Cette distance est également celle qui sépare deux boîtiers consécutifs d'un système monotrace, alors que les boîtiers d'un système à N traces sont séparés d'environ (Nx50) mètres.

Ces deux architectures comportent chacune des avantages et des inconvénients, que l'on peut résumer comme suit :

| Avantages Architecture Monotrace (Figure 1) | Avantages Architecture Multitrace (Figure 2) |
|---|---|
| • Qualité du signal transmis: les lignes analogiques (de la trace au boîtier) sont courtes et isolées les unes des autres • Souplesse de déploiement sur le terrain (le câble C est simple et léger à manipuler, et il est donc facile de s'adapter à la topographie locale (pour contourner les obstacles par exemple) • Simplicité du câble principal 10, et des connecteurs de ce câble avec les boîtiers B(i). • Taille réduite des boîtiers B(i) et du câble C. | • Réduction du nombre de raccordements câble principal/boîtiers (divisé par 4 dans l'exemple de la figure 2 ; par N dans le cas général d'un système à N traces), et du coût associé. • Réduction du nombre de boîtiers et du coût associé. |
| Inconvénients Architecture Monotrace (Figure 1) | inconvénients Architecture Multitrace(Figure 2) |
| • Grand nombre de raccordements câble C/boîtier (2 connexions par trace). • Nombre de boîtiers (1 par trace) ; coûts d'équipement et de manutention associés | • Manque de souplesse (système dont l'élément de base est un ensemble de N traces). • Poids et complexité du câble C'. • Problèmes de qualité des signaux analogiques reçus par les boîtiers B' (j) : plusieurs brins voisins compris dans la même gaine véhiculent des signaux analogiques sensibles et de niveau faible, ce qui peut entraîner des diaphonies. De plus, les liaisons analogiques sensibles entre les capteurs d'une trace et leur boîtier associé peuvent être longues (par exemple 125 mètres pour un système à 6 traces). |

Les deux architectures décrites ci-dessus ont en outre des inconvénients communs :
Tout d'abord, le nombre de raccordements R ou R' est important, même si ce nombre est réduit dans le cas d'un système multitrace. Les chantiers d'acquisition de données étant mobiles sur le terrain, un même matériel comprenant les traces et les boîtiers est successivement déployé et ramassé en des endroits différents, ce qui implique de très nombreuses opérations pour faire et défaire les multiples raccordements du système. On comprend donc que ce grand nombre de raccordements est particulièrement pénalisant en termes de coût de main d'oeuvre et de délai.
Un autre inconvénient commun aux deux types de système est que chacun des boîtiers qu'ils mettent en oeuvre comporte deux connecteurs pour le raccordement avec un câble principal. La présence de ces connecteurs sur le boîtier constitue un obstacle important à la miniaturisation du boîtier, alors que les développements technologiques actuels permettent de réduire sensiblement l'encombrement des autres composants du boîtier. Il serait pourtant avantageux de réduire la taille des boîtiers, qui constituent actuellement des éléments volumineux des systèmes et peuvent être gênants dans les opérations de pose et de ramassage.
Un troisième inconvénient commun aux systèmes actuels vient du fait qu'il est parfois nécessaire de compléter les raccordements entre le câble principal et les boîtiers par des dispositifs de reprise d'efforts, tels que des portions de câbles de traction dont une extrémité est fixée à une partie du câble électrique proche du boîtier et l'autre extrémité est montée, de manière amovible ou non, sur le boîtier lui-même.

Cette disposition peut être nécessaire lorsque l'ensemble formé par les câbles et les boîtiers est soumis à des efforts de traction, par exemple lors de l'immersion de l'ensemble dans une eau parcourue par un fort courant.

De tels dispositifs de reprise d'efforts augmentent la complexité et le temps de mise en oeuvre du système, car lors du montage et du démontage de boîtiers pourvus de dispositifs amovibles de reprise d'efforts, la connexion et déconnexion des câbles électriques et des boîtiers doit s'accompagner de l'arrimage et du désarrimage mécanique desdits dispositifs de reprise d'efforts.

De plus, le dispositif de reprise d'efforts (comprenant des moyens sur le boîtier tels que par exemple des anneaux solidaires du boîtier) constitue tout comme les connecteurs un obstacle à la miniaturisation des boîtiers.

Par ailleurs, dans les deux types d'architecture connus, il est nécessaire de manipuler deux familles d'objets ayant des dimensions très différentes : les boîtiers et les tronçons du câble principal d'autre part, avec une logistique spécifique adaptée à chaque famille.

Or on souhaite aujourd'hui faire évoluer les opérations de pose et de ramassage des systèmes d'acquisition vers une automatisation plus grande, afin de diminuer les coûts de main d'oeuvre associés et de réduire la durée de ces opérations. Le fait de devoir manipuler ces deux familles d'objets rend aujourd'hui une telle évolution délicate.

Enfin, on a vu que les deux architectures présentaient chacune des inconvénients. Les opérateurs doivent donc déterminer, en fonction des spécificités de la campagne d'acquisition de données géophysiques à réaliser, l'architecture adaptée. Ceci implique que dans de nombreux cas aucun choix d'architecture ne sera optimal, et que les opérateurs doivent disposer du matériel nécessaire à la mise en oeuvre de l'architecture choisie, ce qui conduit à un suréquipement ou à des locations pénalisantes en termes de coûts.

Un but de l'invention est de permettre de réaliser des systèmes d'acquisition de données géophysiques de fabrication et d'exploitation économiques grâce à la réduction importante du nombre de connecteurs mis en oeuvre dans ces systèmes.

Un deuxième but de l'invention est de faciliter les opérations de pose et de ramassage des systèmes d'acquisition en harmonisant le format de leurs composants (qui comprennent actuellement des boîtiers et des câbles, les formats de ces deux types de composants étant très différents).

Un troisième but de l'invention est de permettre de réaliser un système dans lequel les boîtiers soient de dimensions sensiblement inférieures aux dimensions des boîtiers actuels.

Un autre but de l'invention est de permettre de réaliser des systèmes selon les objectifs ci-dessus, dans lesquels les boîtiers peuvent être soumis à des efforts de traction importants (de l'ordre de 500 Newton pour une exploitation en environnement terrestre, et de l'ordre de 2500 Newton pour une exploitation en milieu humide de type « shallow water » selon la terminologie répandue), tout en demeurant de dimensions réduites (de l'ordre de 200 cm³).

Afin d'atteindre ces buts, l'invention propose un module d'acquisition de signaux géophysiques selon la revendication 1 :

Des aspects préférés, mais non limitatifs du module selon l'invention figurent dans les revendications dépendantes.

D'autres aspects, buts et avantages de la présente invention apparaîtront mieux à la lecture de la description détaillée suivante d'une forme de réalisation préférée de celle-ci, donnée à titre d'exemple et faite en référence aux figures 3 à 6b des dessins annexés, dessins sur lesquels :
- la figure 1 est une représentation schématique d'un système d'acquisition de données géophysiques, selon un premier type d'architecture connu,
- la figure 2 est une représentation schématique d'un système d'acquisition de données géophysiques, selon un second type d'architecture connu différent du type de la figure 1,
- la figure 3 est une représentation schématique d'une architecture de système d'acquisition de données géophysiques selon l'invention,
- la figure 4 est une vue schématique éclatée des principaux composants d'une première forme de réalisation d'un boîtier d'un système selon l'invention,
- les figures 5a et 5b sont deux vues schématiques en coupe de deux variantes d'une deuxième forme de réalisation d'un boîtier d'un système selon l'invention,
- les figures 6a et 6b sont une vue en perspective et une vue éclatée d'une troisième forme de réalisation d'un boîtier d'un système selon l'invention.

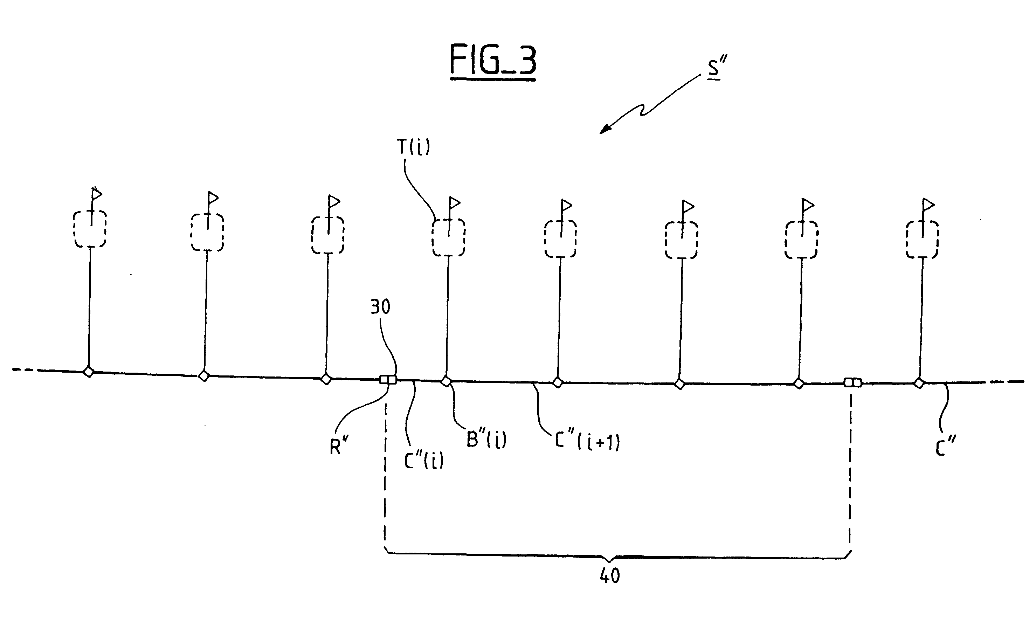

En référence à la figure 3, on a représenté un système S" d'acquisition de données géophysiques selon l'invention.

Comme les systèmes connus, il comprend une pluralité de traces T(i) reliées à des moyens de stockage des données (non représentés) par l'intermédiaire d'un câble C".

Plus précisément, comme dans les systèmes monotrace, chaque trace T(i) est reliée individuellement à un boîtier respectif B"(i).

Mais au contraire des systèmes connus représentés sur les figures 1 et 2, aucun connecteur pour la liaison électrique avec l'unité centrale ou la liaison des boîtiers entre eux n'est fixé sur les boîtiers. Dans le système selon l'invention, chaque boîtier B"(i) est associé à deux tronçons de câble C"(i) et C"(i+1) pour la connexion électrique avec les boîtiers voisins.

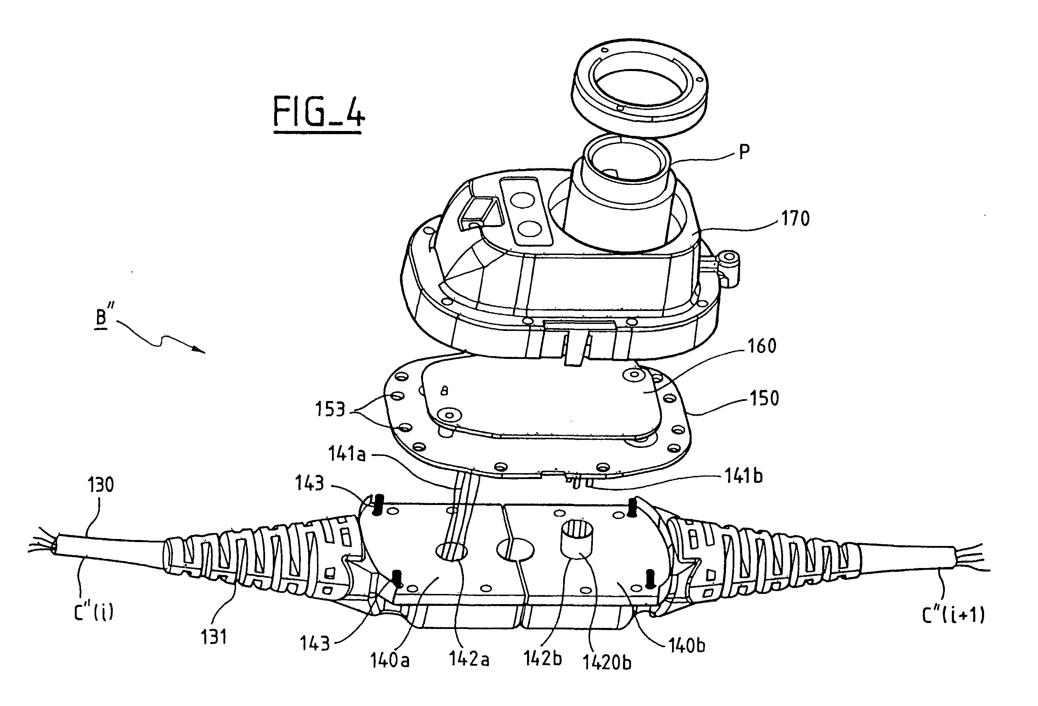

Les deux tronçons de câble C"(i) et C"(i+1) sont fixés sur le boîtier B"(i), en étant de préférence alignés de part et d'autre du boîtier. La structure de la liaison entre les tronçons de câble et le boîtier sera décrite en référence aux figures 4, 5a, 5b et 6b.

Chaque tronçon de câble C"(i) est muni à une première extrémité de moyens de raccordement avec un boîtier B"(i), la deuxième extrémité du tronçon C"(i) pouvant être identique à la première et être également munie de moyens de raccordement avec un boîtier, ou encore comprendre un connecteur 30 hermaphrodite électriquement et mécaniquement pouvant être connecté à un autre connecteur identique.

Les boîtiers B"(i) sont ainsi reliés en série par l'intermédiaire des moyens de raccordement d'extrémité des tronçons de câble, pour constituer des modules 40 dont les deux extrémités sont munies d'un connecteur 30 pour le raccordement R" au module voisin.

Le module 40 représenté sur la figure 3 comporte quatre boîtiers B"(i) reliés chacun à une trace T(i). Selon l'invention, le nombre de boîtiers d'un module peut être quelconque, le module pouvant ne comprendre qu'un boîtier, ou en comprendre plusieurs.

On comprend donc que :
- d'une part, le nombre de raccordements R" est divisé par deux par rapport aux systèmes connus comportent le moins de raccordements (systèmes muititraces). En effet, la mise en oeuvre d'un système multitrace à N traces nécessite deux raccordements par boîtier, et donc 2/N raccordements par trace. Dans le système selon l'invention, ce rapport est encore divisé par deux, à une valeur de 1/N raccordement par trace.
- d'autre part, les boîtiers B"(i) ne portent pas directement de connecteurs, ce qui permet de les concevoir de taille réduite, comme on va le voir en référence en particulier à la figure 4.

En référence maintenant à la figure 4, on a représenté en vue éclatée un boîtier B" d'un système d'acquisition selon l'invention avec ses deux tronçons de câble identiques C"(i) et C"(i+1).

Le tronçon C"(i) comprend dans sa gaine 130 l'ensemble des conducteurs électriques nécessaires au raccordement à l'unité centrale ou à d'autres boîtiers B", pour véhiculer les données issues de capteurs reliés aux boîtiers du système d'acquisition.

Ce tronçon est muni à une première extrémité éloignée du boîtier d'un connecteur non représenté sur la figure, apte à être raccordé mécaniquement et électriquement à un connecteur identique solidaire d'un autre boîtier ou d'une unité centrale.

La deuxième extrémité du tronçon C"(i) est raccordée électriquement à des moyens de traitement des signaux fixés sur un insert en plastique rigide (l'insert et ses moyens de traitement n'étant pas représentés). Ces moyens de traitement peuvent notamment comprendre des limiteurs de surtension (pouvant utiliser des éclateurs).

La gaine du tronçon C"(i) est également engagée dans un conduit de l'insert dans lequel le tronçon C"(i) suit une trajectoire en « S » pour contourner des chicanes de l'intérieur du conduit. Ainsi le tronçon C"(i) et l'insert sont-ils également solidaires mécaniquement (les chicanes du conduit définissant des passages dont la largeur n'est guère supérieure au diamètre de la gaine du tronçon de câble), leur liaison mécanique pouvant résister à une traction de l'ordre de 500 Newton.

Un surmoulage en une matière plastique semi-rigide identique à celle de la gaine du câble est réalisé autour du tronçon de câble C"(i), de l'insert et de ses moyens de traitement. Ce surmoulage réunit en une pièce unique une partie 131 entourant la partie du tronçon C"(i) adjacente à l'insert, et un embout de forme généralement aplatie 140a qui constitue la partie du surmoulage la plus éloignée du tronçon C"(i). Le matériau de ce surmoulage peut être par exemple du polyuréthane.

La géométrie à ailettes de la partie 131 la rend suffisamment souple pour permettre certaines déformations du tronçon de câble qu'elle entoure, mais suffisamment rigide pour limiter ces déformations à l'intérieur d'un cône angulaire déterminé.

En limitant ainsi la courbure du tronçon de câble se trouvant à proximité du boîtier, la partie 131 de surmoulage préserve la liaison entre le tronçon de câble et le boîtier d'efforts de cisaillement susceptibles d'endommager cette liaison.

Ce surmoulage, qui recouvre l'extrémité du tronçon de câble et les moyens de traitement de l'insert, comprend également un conduit 142a de direction perpendiculaire au tronçon C"(i), permettant d'accéder de l'extérieur aux moyens de traitement de l'insert.

Ce conduit débouche vers l'extérieur du surmoulage sur une face essentiellement plane de l'embout 140a, ladite face étant dite supérieure. Il constitue le seul point permettant d'accéder à l'intérieur du surmoulage, la gaine du tronçon de câble ayant réagi thermiquement avec le plastique du surmoulage pour constituer un ensemble étanche par ailleurs.

Deux variantes de réalisation de l'invention, correspondant à deux solutions respectives pour relier électriquement les éléments du boîtier, sont rassemblés sur la vue éclatée de la figure 4 :
- dans la partie gauche de la figure, des fils conducteurs 141a sont connectés aux moyens de traitement de l'insert et sortent de l'embout 140a par le conduit 142a,
- dans une variante préférée représentée dans la partie droite de la figure, le conduit 142b d'un deuxième embout 140b, par ailleurs identique au premier embout, est prolongé vers le haut par une cheminée 140b. Le deuxième embout 140b est compris dans un surmoulage entourant un deuxième tronçon de câble C"(i+1)) identique à C"(i) et un deuxième insert identique à celui de l'embout 140a.

Deux pions 143 rigides sont saillants perpendiculairement hors de la face supérieure de l'embout 140a. La partie inférieure de ces pions noyée dans l'insert rigide, est assez importante pour que l'ancrage des pions dans l'insert puisse résister sans dommage à des efforts de cisaillement de l'ordre de 2550 Newton appliqués parallèlement à la face supérieure de l'embout sur la partie saillante des pions.

Sur le schéma de la figure 4, les deux embouts 140a et 140b sont en position de montage du boîtier. Dans cette position, les embouts sont placés de manière à ce que leurs faces supérieures respectives soient adjacentes et définissent un plan unique, et les tronçons C"(i) et C"(i+1) sont alignés. Les faces de contact mutuel des deux embouts sont généralement planes et perpendiculaires à l'axe des tronçons C"(i) et C"(i+1 ).

On a représenté au-dessus des embouts ainsi assemblés une platine 150 dont la surface correspond à la réunion des deux faces supérieures des embouts.

Cette platine est réalisée dans un matériau métallique rigide tel que l'acier, et est percée de quatre trous 153 se trouvant en regard des pions des deux embouts lorsque ceux-ci sont en contact dans la position de montage du boîtier. Ces trous 153 ont un diamètre correspondant à celui des pions.

Une deuxième platine 160 est fixée sur la face supérieure de la platine 150, éloignée des embouts 140a et 140b. Cette deuxième platine porte également des moyens de traitement des signaux pouvant être réalisés sous la forme d'un circuit imprimé placé par exemple sur la face inférieure de la platine 160, relié :
- aux conducteurs 141a de l'embout 140a dans la variante de la partie gauche de la figure,
- à des broches de connexion 141b aptes à être engagées dans la cheminée 1420b pour la connexion avec les moyens de traitement de l'embout 140b dans la variante préférée de la partie droite de la figure.

Quelle que soit la variante de réalisation choisie, les conducteurs 141a et les broches 141b traversent chacun un orifice de la platine 150 (non visible sur la figure) pour la connexion avec les moyens de traitement des embouts.

Lorsque le boîtier est monté, la platine 150 est plaquée sur les embouts 140a et 140b, chacun des pions 143 étant engagé dans un des quatre orifices 153 de la platine pour garantir l'ancrage des deux embouts dans les directions parallèles à leurs faces supérieures.

Un couvercle 170 recouvrant les deux platines 150 et 160 par le dessus comprend une prise P pour la connexion d'un point de mesure, non représenté sur la figure. Les fiches de cette prise sont reliées aux moyens de traitement de la platine 160 par des broches ou des conducteurs, également non représentés sur la figure par souci de clarté.

Lorsque le boîtier B" est fermé, les inserts des deux embouts, la platine 150 et le couvercle 170 sont fixés ensemble par des vis traversant des orifices de la platine 150 et permettent comme on va le voir de constituer un ensemble totalement étanche.

Le boîtier B" du système d'acquisition selon l'invention ne comporte donc pas sur son corps principal (matérialisé par les deux embouts et le couvercle) de connecteur pour le raccordement à d'autres boîtiers, les connecteurs hermaphrodites pour un tel raccordement étant éventuellement déportés au bout des tronçons de câble C"(i) et C"(i+1).

Une conséquence avantageuse en est que ce boîtier B" peut être de dimensions particulièrement réduites - de l'ordre de 200 cm³, alors que les boîtiers des systèmes actuels ont un volume atteignant couramment plusieurs litres.

De plus, la reprise d'effort par les pions 143 permet de s'affranchir des dispositifs supplémentaires de reprise d'efforts évoqués ci-dessus, qui n'étaient pas intégrés aux boîtiers existants.

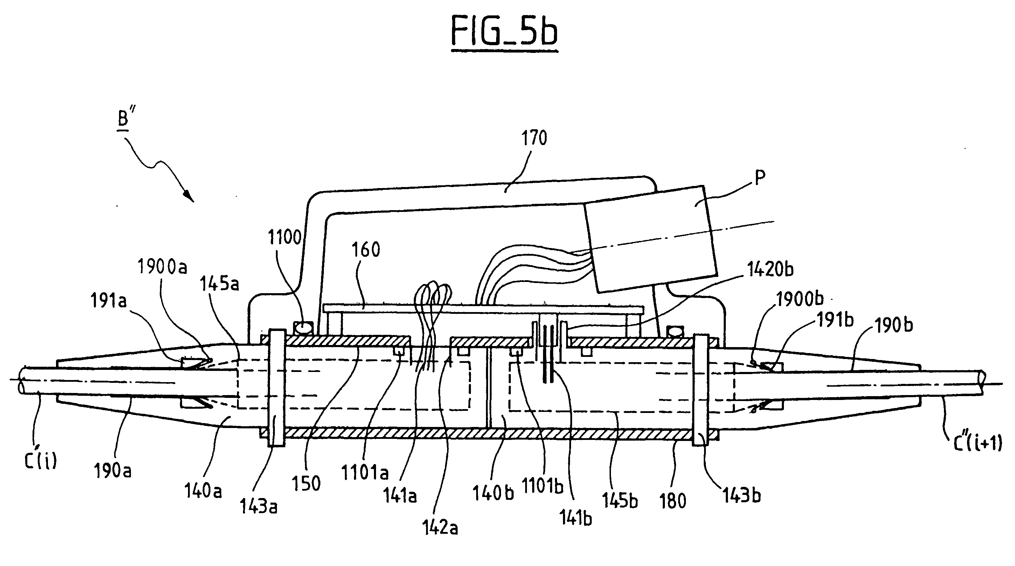

En effet, dans le système selon l'invention les efforts de traction entre les câbles reliant les boîtiers entre eux ou à l'unité centrale sont repris par la succession des éléments suivants :
- gaine du câble (et éventuellement armature supplémentaire du câble en Kevlar (marque déposée) dans le cas d'une liaison renforcée) qui est relié à un premier côté du boîtier,
- liaison entre l'extrémité du câble et un premier insert de l'embout. Cette liaison est comme on l'a vu assurée par l'engagement de la gaine du câble entre des chicanes de l'insert, mais peut également comme on va le voir plus particulièrement en référence à la figure 5b, mettre en oeuvre le serrage de l'extrémité d'une armature en Kevlar (marque déposée) dans le cas d'une liaison renforcée,
- pions saillants hors du premier insert et du premier embout associé,
- platine dans laquelle les pions saillants sont engagés (et éventuellement deuxième platine comme décrit plus loin en référence à la figure 5b),
- pions du deuxième embout du boîtier,
- insert du deuxième embout,
- gaine du deuxième tronçon de câble relié à un deuxième côté du boîtier.

Le fait de s'affranchir des dispositifs classiques de reprise d'efforts permet ainsi également de supprimer les inconvénients cités plus haut et liés aux dispositifs classiques de reprise d'efforts.

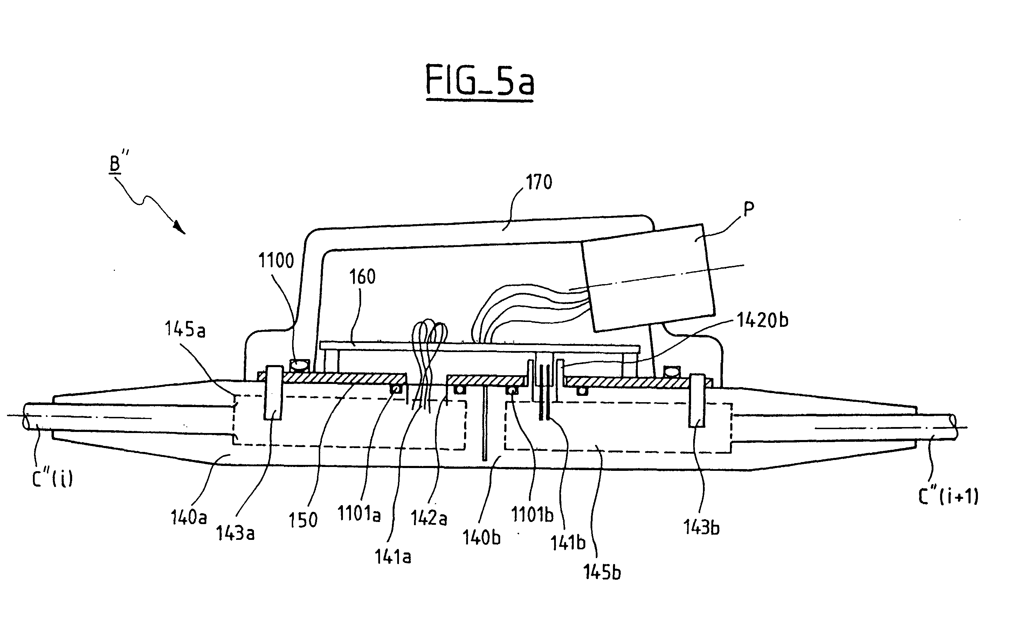

La figure 5a est une vue en coupe longitudinale représentant schématiquement un deuxième mode de réalisation d'un boîtier B" selon l'invention destiné à être mis en oeuvre dans un environnement terrestre, ledit boîtier étant cette fois assemblé. On retrouve respectivement sur les parties droite et gauche de cette figure les deux variantes de réalisation déjà représentées sur la figure 4.

Sur cette figure, on retrouve les deux tronçons de câble C"(i) et C"(i+1) qui sont alignés de part et d'autre du boîtier. L'embout 140a d'extrémité du tronçon C"(i) est en contact avec l'embout 140b d'extrémité du tronçon C"(i+1). La platine 150 est fixée (par des moyens non représentés classiques tels que des vis, qui maintiennent également le couvercle 170 sur les faces supérieures planes des deux embouts adjacents, et porte sur sa face supérieure la platine 160 qui comprend des moyens de traitement des signaux, lesdits signaux étant véhiculés par :
- les conducteurs électriques 141a qui traversent le conduit 142a de l'embout 140a pour être en contact électrique avec les moyens de traitement compris à l'intérieur de cet embout (variante de la partie gauche de la figure),
- les broches 141 b engagées dans la cheminée 1420b (qui se prolonge à l'intérieur de l'embout 140b jusqu'aux moyens de traitement par un autre conduit), et connectées avec les moyens de traitement compris à l'intérieur de l'embout 140b (variante de la partie droite de la figure).

Dans les deux cas, les conducteurs 141a et les broches 141b traversent chacun un conduit respectif de la platine 150.

La figure 5b illustre une configuration différente des pions 143a et 143b des embouts respectifs 140a et 140b. Les pions sont ici comme sur la figure 4 partiellement noyés dans l'insert 145a, 145b de leur embout associé, mais sont saillants perpendiculairement hors des deux faces {supérieure et inférieure) dudit embout.

Leur partie supérieure saillante est engagée tout comme celle des pions 143 de la figure 4 dans un orifice de la platine 150, leur partie inférieure saillante étant en outre engagée dans un orifice d'une platine supplémentaire 180 plaquée et vissée contre la face inférieure plane des deux embouts 140a et 140b qui se trouvent alors «pris en sandwich» entre les deux platines 150 et 180.

Cette variante de réalisation - deuxième platine 180 de reprise d'effort et pions saillants également vers le bas pour ancrer les embouts sur cette deuxième platine - est avantageuse dans le cas où les deux tronçons de câble du boîtier sont susceptibles d'être soumis à une traction importante (de l'ordre de 2500 Newton). Elle constitue ainsi une variante de réalisation préférée pour une mise en oeuvre du boîtier en environnement maritime ou humide, de type « shallow water ».

En pratique, un tel dispositifest conçu pour résister à des tractions de l'ordre de 2500 Newton, alors que le premier mode de réalisation ne faisant intervenir que des pions saillants vers le haut comme représenté sur la figure 4 autorise des efforts longitudinaux de l'ordre de 500 Newton.

La figure 5b illustre également une variante de réalisation de la liaison mécanique entre les tronçons C"(i), C"(i+1) et les inserts respectifs 145a, 145b des embouts respectifs 140a, 140b. Pour résister à des tractions importantes, chaque tronçon de câble peut être renforcé par une gaine supplémentaire 190a, 190b en Kevlar (marque déposée) dont l'extrémité adjacente à l'embout 140a, 140b correspondant présente une surépaisseur 1900a, 1900b serrée dans un mécanisme d'écrou conique respectif 191a, 191b noyé dans le surmoulage de l'embout respectif.

La configuration géométrique du boîtier représenté sur les figures 5a et 5b est quelque peu différente de celle du boîtier de la figure 4. En effet, dans ce cas, la prise P pour la connexion d'un point de mesure n'est pas située perpendiculairement à la face supérieure du couvercle 170 du boîtier, mais est orientée en biais. Cette caractéristique ne modifie en rien les fonctionnalités du boîtier.

Sur les figures 5a et 5b, on a également représenté les moyens permettant de garantir l'étanchéité du dispositif qui peut être exposé à des environnement agressifs faisant intervenir par exemple de la poussière ou de l'eau susceptibles de pénétrer à l'intérieur du boîtier et d'endommager ses composants.

A cet effet, il est prévu un joint torique 1100 d'étanchéité disposé dans un alésage du couvercle 170 et destiné à garantir l'étanchéité entre le couvercle 170 et la platine 150. Il est également prévu un joint 1101a torique logé dans une cavité circulaire affleurant sur la face supérieure de l'embout 140a et entourant l'orifice pratiqué dans la platine 150 qui est en regard du conduit 142a pour le passage des conducteurs 141a lorsque la platine 150 est plaquée sur l'embout.

Ce joint 1101a garantit ainsi l'étanchéité du passage des conducteurs 141a. De même il est prévu un joint 1101b torique dans une cavité circulaire débouchant sur la face supérieure de l'embout 140b pour garantir l'étanchéité du passage de la broche 141b.

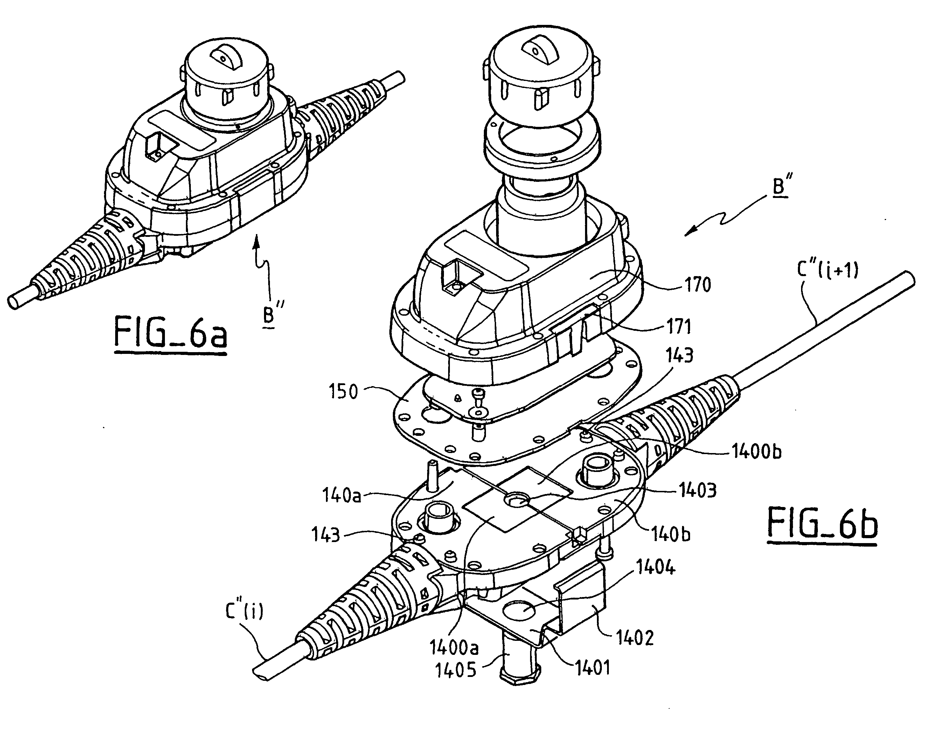

Les figures 6a et 6b permettent de visualiser un troisième mode de réalisation d'un boîtier B".

La figure 6b fait apparaître deux embouts 140a et 140b destinés à être assemblées par l'intermédiaire des pions 143 et de la platine 150.

Cette figure montre également deux plaques 1400a et 1400b électriquement conductrices logées dans des évidements respectifs des faces supérieures des deux embouts de manière à s'étendre dans le prolongement desdits faces supérieures.

Ces deux plaques sont venues de matière chacune avec deux axes invisibles sur la figure, logés dans des conduits qui traversent la paroi supérieure de l'embout pour mettre en communication électrique chaque plaque avec le circuit portant les moyens de traitement des signaux de l'insert de l'embout associé.

La figure 6b montre également une ceinture métallique et électriquement conductrice 1401 destinée à être montée sur la face inférieure du boîtier, les extrémités recourbées de ses deux branches (dont seule une branche 1402 est visible sur la figure) venant s'engager dans des cavités 171 du capot 170 lorsque le boîtier est monté, afin d'améliorer encore la cohésion de l'ensemble.

On remarquera sur la figure 6b que les embouts 140a et 140b définissent lorsqu'ils sont assemblés un puits central 1403 qui traverse de part en part l'assemblage formé par les deux embouts et débouche vers le bas du boîtier sur la ceinture 1401.

Cette ceinture 1401 comprend également un orifice 1404 aligné avec le puits 1403 lorsque la ceinture est montée sur le boîtier.

Un doigt métallique 1405 visible sur la figure 6b est engagé, lorsque le dispositif est monté, dans l'orifice 1404 et le puits 1403 de manière à venir en contact avec les plaques 1400a et 1400b. Ce doigt est électriquement conducteur et permet ainsi de relier électriquement la ceinture 1401 aux circuits des inserts des deux embouts portant les moyens de traitement des signaux, par l'intermédiaire du doigt 1404 et des plaques 1400a et 1400b.

Le doigt 1405 peut être solidarisé avec une pointe non représentée, également électriquement conductrice et destinée à être fichée dans le sol, la dite pointe assurant alors à la fois :
- la solidarisation du boîtier B" avec le sol dans le cas d'une utilisation en environnement terrestre,
- et la mise à la masse des circuits des inserts portant les moyens de traitement des signaux par l'intermédiaire de la ceinture 1401 qui constitue ainsi une ceinture de masse.

Dans le cas d'une mise en oeuvre dans un environnement maritime, le dispositif ne comprend pas de pointe associée au doigt 1405 qui est en contact avec l'eau ainsi que la ceinture 1401, ces deux éléments effectuant ainsi également une mise à la masse des circuits des inserts.

On remarquera que le boîtier B" décrit ci-dessus est facilement démontable, les tronçons de câbles C" (i) et C" (i+1) pouvant chacun aboutir à leur extrémité éloignée du boîtier soit à un embout d'un boîtier voisin, soit à un connecteur terminant un module 40 tel que représenté sur la figure 3, comprenant plusieurs boîtiers reliés en série.

Dans une variante de réalisation non représentée sur les figures, il est également possible de surmouler l'ensemble qui n'est alors plus démontable mais dont la robustesse se trouve augmentée par ledit surmoulage.

Il apparaît ainsi que le système selon l'invention permet :
- de réaliser des économies de fabrication substantielles en divisant au maximum par deux le nombre de connecteurs mis en oeuvre entre les modules,
- de fiabiliser le système par la réduction du nombre de connexions,
- d'homogénéiser le format des composants du système et de faciliter ainsi leur manipulation,
- de faciliter la manipulation du système grâce à la miniaturisation des boîtiers et à l'intégration dans le corps des boîtiers des moyens de reprise d'efforts.
- de déployer simplement et rapidement des « grappes » constituées de boîtiers montés en série, lesdites grappes pouvant par exemple être enroulées sur un touret-grâce au volume réduit des boîtiers.

## Revendications

1. Module (40) d'acquisition de signaux géophysiques, comprenant :
• au moins un boîtier (B"(i), B"), logeant des moyens de traitement incluant des moyens de numérisation des signaux, chaque boîtier étant associé à une trace (T(i)),
• et deux tronçons de câble (C"(i)) comportant chacun :
- à une première extrémité, un connecteur (30) associé à une extrémité du module et adapté pour être raccordé à un connecteur complémentaire d'un autre module,
- à une deuxième extrémité, un embout (140a, 140b) conçu pour être fixé à un boîtier (B", B"(i)) et assurer une liaison électrique avec les moyens de traitement logés dans le boîtier,
les boîtiers du module étant, dans le cas où ledit module comprend au moins deux boîtiers, reliés en série par des tronçons de câble munis chacun à leurs deux extrémités d'un embout (140a, 140b), le corps principal de chaque boîtier étant matérialisé par les deux embouts (140a, 140b) des tronçons de câble qui lui sont adjacents et par un couvercle (170), les embouts et le couvercle étant fixés ensemble de manière non amovible de sorte que le boîtier ne comporte pas de connecteur pour le raccordement à d'autres boîtiers.

2. Module (40) selon la revendication 1, **caractérisé en ce qu'**il comprend au moins deux boîtiers (B"(i), B"), reliés en série par des tronçons de câble (C"(i+1)) dont chacun comprend à ses deux extrémités un embout (140a, 140b) conçu pour être fixé à un boîtier et assurer une liaison électrique avec les moyens de traitement logés dans le boîtier.

3. Module (40) selon la revendication 1 ou 2, **caractérisé en ce que** chaque boîtier (B") comporte une pièce (150) rigide fixée sur une face des embouts (140a, 140b) respectifs solidaires des tronçons ou segments de câble respectifs, pour reprendre une partie importante des efforts de traction exercés entre ces deux tronçons ou segments de câble.

4. Module selon la revendication 3, **caractérisé en ce que** chaque boîtier (B") comporte des moyens d'accrochage (143, 143a, 143b) des embouts des câbles sur la pièce rigide (150).

5. Module selon la revendication 4, **caractérisé en ce que** les moyens d'accrochage sont des pions (143, 143a, 143b) rigides dont une partie est noyée dans l'embout, une autre partie de chaque pion étant saillante hors de l'embout vers la pièce rigide (150) et engagée dans un orifice (153) respectif de la pièce rigide selon une direction sensiblement perpendiculaire à la direction de la partie des tronçons ou segments de câble adjacente au boîtier (B").

6. Module selon l'une des revendications précédentes, **caractérisé en ce que** des moyens de traitement intégrés dans les embouts de câble comprennent des éclateurs.

7. Module selon l'une des revendications 3 à 6, **caractérisé en ce que** la pièce rigide porte des moyens de traitement de signaux électriques.

8. Module selon l'une des revendications précédentes, **caractérisé en ce que** chaque boîtier comporte des moyens d'étanchéité (1100, 1101a, 1101b).

9. Module selon l'une des revendications 5 ou 6 prise en combinaison avec la revendication 8, **caractérisé en ce que** les moyens d'étanchéité comprennent un joint (1100) placé dans un espace circonscrit par les pions (143).

10. Module selon l'une des revendications 3 à 9, **caractérisé en ce que** au moins un boîtier comporte une platine (180) située sur une deuxième face des câbles opposée à la première face et sensiblement parallèle à la pièce rigide (150).

11. Module selon les revendications 5 et 10 prises en combinaison, **caractérisé en ce que** des parties des pions (143) saillantes vers la platine (180) sont engagées dans des orifices de ladite platine.

12. Module selon l'une des revendications précédentes, **caractérisé en ce que** les connecteurs (30) d'extrémité de tronçon de câble sont hermaphrodites mécaniquement et électriquement et sont identiques.

13. Module selon l'une des revendications 1 à 12, **caractérisé en ce que** les boîtiers comportent une prise (P) pour la connexion d'au moins un capteur géophysique extérieur au boîtier.

## Patentansprüche

1. Modul (40) zur Erfassung geophysikalischer Signale, umfassend:
• wenigstens ein Gehäuse (B"(i), B"), das Verarbeitungsmittel, die Digitalisierungsmittel für Signale einschließen, aufnimmt, wobei jedes Gehäuse einer Strecke (T(i)) zugeordnet ist,
• und zwei Kabelabschnitte (C"(i)), von denen jeder folgendes umfaßt:
- an einem ersten Ende ein Anschlußelement (30), das einem Ende des Moduls zugeordnet und dazu ausgestaltet ist, mit einem komplementären Anschlußelement eines anderen Moduls verbunden zu werden,
- an einem zweiten Ende ein Ansatzstück (140a, 140b), das dafür ausgebildet ist, an einem Gehäuse (B", B"(i)) befestigt zu werden und eine elektrische Verbindung mit den im Gehäuse aufgenommenen Verarbeitungsmitteln sicherzustellen,
wobei die Gehäuse des Moduls im Fall, daß das Modul wenigstens zwei Gehäuse aufweist, durch Kabelabschnitte in Reihe verbunden sind, von denen jeder an seinen beiden Enden mit einem Ansatzstück (140a, 140b) ausgestattet ist, wobei der Hauptteil jedes Gehäuses durch die beiden Ansatzstücke (140a, 140b) der zu ihm benachbarten Kabelabschnitte und durch einen Deckel (170) realisiert wird, wobei die Ansatzstücke und der Deckel nicht abnehmbar in der Weise miteinander fest verbunden sind, daß das Gehäuse keine Anschlußelemente zur Verbindung mit anderen Gehäusen umfaßt.

2. Modul (40) nach Anspruch 1, **dadurch gekennzeichnet, daß** es wenigstens zwei Gehäuse (B"(i), B") umfaßt, die in Reihe durch Kabelabschnitte (C"(i+1)) verbunden sind, von denen jeder an seinen beiden Enden ein Ansatzstück (140a, 140b) umfaßt, das dazu ausgebildet ist, an einem Gehäuse befestigt zu werden und eine elektrische Verbindung mit den im Gehäuse aufgenommenen Verarbeitungsmitteln sicherzustellen.

3. Modul (40) nach Anspruch 1 oder 2, **dadurch gekennzeichnet, daß** jedes Gehäuse (B") ein starres Teil (150) umfaßt, das auf einer Seite der jeweiligen Ansatzstücke (140a, 140b), die fest mit dem jeweiligen Kabelabschnitt oder Kabelsegment verbunden sind, befestigt ist, um einen erheblichen Teil der zwischen diesen beiden Abschnitten oder Segmenten ausgeübten Zugkräfte aufzunehmen.

4. Modul nach Anspruch 3, **dadurch gekennzeichnet, daß** jedes Gehäuse (B") Mittel (143, 143a, 143b) zur Kopplung der Kabelansatzstücke mit dem starren Teil (150) umfaßt.

5. Modul nach Anspruch 4, **dadurch gekennzeichnet, daß** die Kopplungsmittel starre Stifte (143, 143a, 143b) sind, von denen ein Abschnitt im Ansatzstück steckt und ein anderer Abschnitt jedes Stifts aus dem Ansatzstück in Richtung des starren Teils (150) hervorsteht und in einer entsprechenden Öffnung (153) des starren Teils entlang einer Richtung eingreift, die im wesentlichen rechtwinklig zur Richtung des zum Gehäuse (B") benachbarten Teils der Kabelabschnitte oder Kabelsegmente ist.

6. Modul nach einem der vorhergehenden Ansprüche, **dadurch gekennzeichnet, daß** in den Kabelansatzstücken integrierte Verarbeitungsmittel Überspannungsableiter umfassen.

7. Modul nach einem der Ansprüche 3 bis 6, **dadurch gekennzeichnet, daß** das starre Teil Verarbeitungsmittel für elektrische Signale trägt.

8. Modul nach einem der vorhergehenden Ansprüche, **dadurch gekennzeichnet, daß** jedes Gehäuse Abdichtungsmittel (1100, 1101a, 1101b) umfaßt.

9. Modul nach einem der Ansprüche 5 oder 6 in Kombination mit Anspruch 8, **dadurch gekennzeichnet, daß** die Abdichtungsmittel eine Dichtung (1100) umfassen, die in einem durch die Stifte (143) umschriebenen Bereich angeordnet ist.

10. Modul nach einem der Ansprüche 3 bis 9, **dadurch gekennzeichnet, daß** wenigstens ein Gehäuse eine Platte (180) umfaßt, die auf einer zweiten Seite der Kabel gegenüber der ersten Seite und im wesentlichen parallel zum starren Teil (150) angeordnet ist.

11. Modul nach den Anspruch 5 in Kombination mit Anspruch 10, **dadurch gekennzeichnet, daß** in Richtung der Platte (180) hervorstehende Abschnitte der Stifte (143) in Öffnungen der Platte eingreifen.

12. Modul nach einem der vorhergehenden Ansprüche, **dadurch gekennzeichnet, daß** die Anschlußelemente (30) der Kabelabschnittenden mechanisch und elektrisch als Zwitter ausgeführt und identisch sind.

13. Modul nach einem der Ansprüche 1 bis 12, **dadurch gekennzeichnet, daß** die Gehäuse einen Anschluß (P) zum Anschluß wenigstens eines außerhalb des Gehäuse liegenden, geophysikalischen Sensors umfassen.

## Claims

1. Module (40) for acquiring geophysical signals, comprising:
• at least one casing (B''(i), B''), which houses processing means including means for digitizing the signals, each casing being associated with a track (T(i)),
• and two cable sections (C"(i)) each comprising:
- at a first end, a connector (30) associated with one end of the module and suitable for being coupled up to a complementary connector of another module,
- at a second end, an adapter (140a, 140b) designed to be fixed to a casing (B'', B''(i)) and to effect an electrical link with the processing means housed in the casing,
the casings of the module being, in the case where the said module comprises at least two casings, linked in series by cable sections each provided at their two ends with an adapter (140a, 140b), the main body of each casing being made up of the two adapters (140a, 140b) of the cable sections adjacent thereto and of a cover (170), the adapters and the cover being fixed together in a nonremovable manner so that the casing does not comprise any connector for coupling to other casings.

2. Module (40) according to Claim 1, **characterized in that** it comprises at least two casings (B''(i), B''), linked in series by cable segments (C''(i+1)) each of which comprises at its two ends an adapter (140a, 140b) designed to be fixed to a casing and to effect an electrical link with the processing means housed in the casing.

3. Module (40) according to Claim 1 or 2, **characterized in that** each casing (B'') comprises a rigid member (150) fixed on one face of the respective adapters (140a, 140b) secured to the respective cable sections or segments, so as to take up a sizeable part of the tensile loads exerted between these two cable sections or segments.

4. Module according to Claim 3, **characterized in that** each casing (B'') comprises means (143, 143a, 143b) for attaching the adapters of the cables to the rigid member (150).

5. Module according to Claim 4, **characterized in that** the means for attachment are rigid lugs (143, 143a, 143b), a part of which is embedded in the adapter, another part of each lug projecting from the adapter towards the rigid member (150) and engaged in a respective orifice (153) of the rigid member along a direction substantially perpendicular to the direction of the part of the cable sections or segments which is adjacent to the casing (B'').

6. Module according to one of the preceding claims, **characterized in that** processing means integrated into the cable adapters comprise spark arresters.

7. Module according to one of Claims 3 to 6, **characterized in that** the rigid member carries means for processing electrical signals.

8. Module according to one of the preceding claims, **characterized in that** each casing comprises leaktightness means (1100, 1101a, 1101b).

9. Module according to one of Claims 5 or 6 taken in combination with Claim 8, **characterized in that** the leaktightness means comprise a seal (1100) placed in a space circumscribed by the lugs (143).

10. Module according to one of Claims 3 to 9, **characterized in that** at least one casing comprises a platen (180) situated on a second face of the cables which is opposite the first face and is substantially parallel to the rigid member (150).

11. Module according to Claims 5 and 10 taken in combination, **characterized in that** parts of the lugs (143) which project towards the platen (180) are engaged in orifices of the said platen.

12. Module according to one of the preceding claims, **characterized in that** the cable section end connectors (30) are mechanically and electrically hermaphrodite and are identical.

13. Module according to one of Claims 1 to 12, **characterized in that** the adapter situated at the second end of each cable section is designed to be fixed in a removable manner to a casing.
